# EUROPEAN PATENT SPECIFICATION

(11) **EP 3 837 938 B1**
(45) Date of publication and mention of the grant of the patent: **11.10.2023**
(21) Application number: 19218052.9
(22) Date of filing: 19.12.2019
(51) Int. Cl.: A01B 63/10, A01B 63/11

(54) **METHOD FOR CONTROLLING AN AGRICULTURAL MACHINERY**
VERFAHREN ZUR STEUERUNG EINER LANDWIRTSCHAFTLICHEN MASCHINE
PROCÉDÉ DE COMMANDE D'UNE MACHINE AGRICOLE

(43) Date of publication of application: 23.06.2021
(73) Proprietor: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(56) References cited:
- EP-A1- 3 219 184
- EP-A1- 3 232 760
- EP-A1- 3 319 411
- WO-A1-2020/023745
- KR-A- 20100 088 059
- US-A- 4 667 744
- US-A1- 2017 359 941

## Description

### Background of the Invention

The present disclosure relates to a method for controlling an agricultural machinery, particularly, but not exclusively, an agricultural plough, during transport. Other aspects of the present disclosure relate to an agricultural machinery, particularly, but not exclusively, an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern plough implements typically include a plurality of plough bodies connected to a plough frame such that they are laterally offset manner from each other when the plough is in use. Each plough body is connected to the plough frame via corresponding beams. The plough frame, in turn, is connected to an
agricultural vehicle for towing or pushing the plough implement via a hitch arranged at a front or back end of the frame.

The plough implement may be transferable between two or more positions. In an operating position, the plough implement may be positioned with respect to the agricultural vehicle such that the ground engaging tools of the plough penetrate the soil of the work area at a desired working depth. In a transport position, the plough implement may be positioned such that ground engaging tools are lifted off the ground. The transport position may be used to transport the agricultural implement to and from the work area, often on public roads. The plough implement may be hydraulically movable with respect to the agricultural vehicle between the transport position and the operating position.

Particularly in fully-mounted ploughs, the plough implement may be lifted above the road surface by the agricultural vehicle with no part of the plough implement being in contact with the road surface. The significant weight of the plough implement, therefore, rests entirely on the agricultural vehicle, creating stress that is substantially amplified by forces created due to changes in speed or direction during transport. These forces created during transport may result in instability and/or increased wear.

In view of the above, there is generally a need for an improved method for controlling an agricultural machinery during transport.

It is an aim of the present disclosure to solve or at least ameliorate one or more problems of the prior art.

US4667744A describes a vehicle, such as a tractor, having an attachment implement, such as a plow. An automatic controller acts upon a power lift of the plow, which moves the plow during operation in trenching position.

EP3219184A1 describes an agricultural work vehicle capable of communicating through a communication device with a host computer and capable of being steered by a remote control device so as to make it possible for the agricultural work vehicle to link with the host computer and perform in an optimum work form.

EP3319411A1 sets out a method of adjusting an orientation of an agricultural implement.

US 2017/0359941 A1 describes a system including an agricultural implement, a sensor, and a control system. The agricultural implement is configured to be coupled to an agricultural vehicle. The sensor is coupled to the agricultural implement and configured to output a signal indicative of a pitch angle of the agricultural implement. The control system is configured to receive the signal indicative of the pitch angle from the sensor, determine whether the pitch angle is within a pitch angle range, generate a hitch height control signal indicative of instructions to adjust a hitch actuator if the pitch angle is not within the pitch angle range, and communicate the hitch height control signal.

EP3232760A1 relates to a method of controlling an agricultural implement.

### Summary of the Invention

Aspects and embodiments of the disclosure provide a method for controlling an agricultural machinery and an agricultural machinery as claimed in the appended claims.

According to one aspect of the present disclosure, a method for controlling an agricultural machinery is provided, the agricultural machinery comprising an agricultural vehicle and an agricultural implement, the agricultural machinery comprising at least one actuator for moving at least a part of the agricultural implement with respect to the agricultural vehicle, wherein the method comprises:
determining a likelihood of a change in the agricultural implement's speed and/or direction of motion; determining an actuator-control-signal based on the likelihood of change; and activating the at least one actuator on the basis of the actuator-control-signal.

According to an embodiment, determining the actuator-control-signal comprises: calculating or predicting a quantity of change in the agricultural implement's speed or direction of motion; anddetermining the actuator-control-signal based on the quantity of change.

In another embodiment, determining the likelihood of a change in the agricultural implement's speed of motion or direction of motion comprises: receiving travel-data associated with route parameters and/or operating parameters of the agricultural vehicle; and determining a likelihood value on the basis of the travel-data.

Determining the likelihood value may comprise calculating or looking-up the likelihood value on the basis of the travel-data.

At least a part of the travel-data may be stored data obtained from a memory device.

At least a part of the travel-data may be live-data obtained from sensors.

In yet another embodiment, the travel-data comprises traffic-data associated with traffic conditions of a route along which the agricultural implement is being moved.

According to another embodiment, the traffic-data may be indicative of one or more of: location and/or speed of other vehicles on the route; presence of temporary obstacles on the route; presence of pedestrians on the route; state of traffic lights on the route; state of level crossings on the route.

The travel-data may comprise map-data associated with characteristics of a route along which the agricultural implement is being moved.

The map-data may be indicative of the location of one or more of: bends, turns or corners along the route; a gradient of the ground surface along the route; traffic signs on the route; speed bumps on the route; junctions along the route; speed limits along the route.

The travel-data may comprise vehicle-data associated with operational parameters of the agricultural vehicle.

In another embodiment, the vehicle-data is indicative of one or more of: current speed of the agricultural vehicle; gear changes of the agricultural vehicle; position and/or actuation of a brake pedal of the agricultural vehicle; position and/or actuation of a gas pedal of the agricultural vehicle; position and/or actuation of a clutch pedal of the agricultural vehicle.

The at least one actuator may be a hydraulic actuator.

According to another aspect of the present disclosure, there is provide an agricultural machinery comprising: an agricultural implement; an agricultural vehicle; at least one actuator for moving at least a part of the agricultural implement; and a control unit configured to: determine a likelihood of a change in the agricultural implement's speed and/or direction of motion, determine an actuator-control-signal based on the likelihood of change; activate the at least one actuator on the basis of the actuator-control-signal.

The agricultural implement may be a fully-mounted agricultural implement.
There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

In another aspect of the present disclosure, there is provided an agricultural machinery comprising an agricultural work vehicle, such as tractor, and a plough implement, wherein the plough implement is connected to the front or rear of the agricultural work vehicle.

The agricultural work vehicle (or tractor) may include one or more control devices, such as but not limited to programmable or non-programmable processors. Similarly, the plough implement may include one or more control devices, such as but not limited to programmable or non-programmable processors. Additionally, or alternatively, the plough implement may be controlled by one or more control devices of the agricultural work vehicle. Similarly, the agricultural work vehicle may be controlled by one or more control devices of the plough implement.

The agricultural work vehicle and/or the plough implement may be remote controlled, e.g. from a farm office. Accordingly, the agricultural work vehicle may include one or more communication interfaces for connection to a remote processor and/or a remote controller. Similarly, the plough implement may include one or more communication interfaces for connection to a remote processor and/or a remote controller.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic plan view of an agricultural machinery in its operating position;
Figure 3 shows a schematic representation of a system for controlling an agricultural implement during transport;
Figures 4A and 4B show schematic representations of an agricultural machinery during transport;
Figure 5 shows a schematic representation of an agricultural machinery during transport;
Figure 6 shows a schematic flow chart of a method according to an embodiment of the present disclosure;
Figure 7 shows a schematic flow chart of a method according to an embodiment of the present disclosure.

### Detailed Description of the Drawings

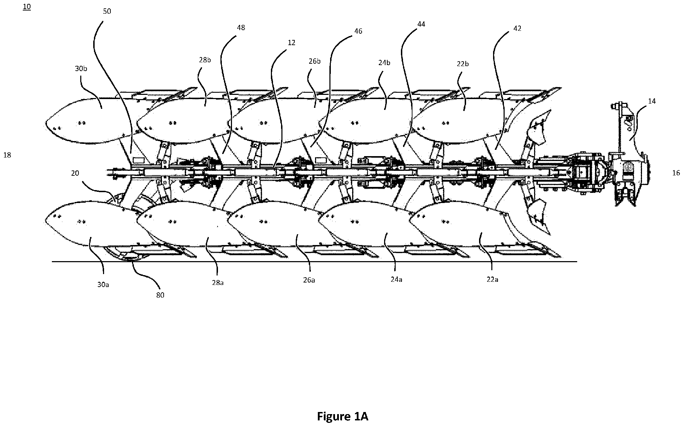

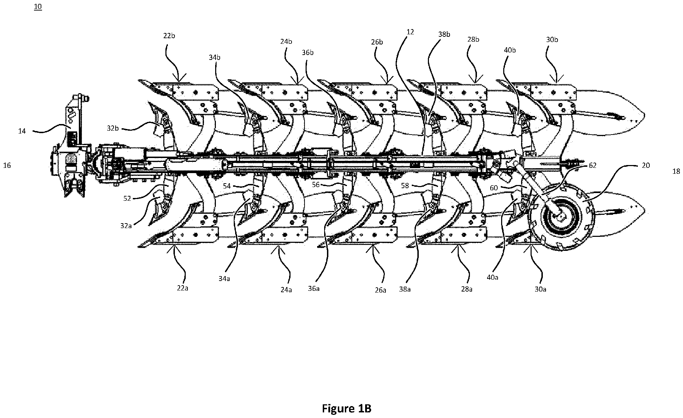

Figures 1A to 1C show various views of a plough implement, particularly a plough implement 10. As will be described in more detail below, the plough implement 10 shown in Figures 1A to 1C is a reversible plough.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

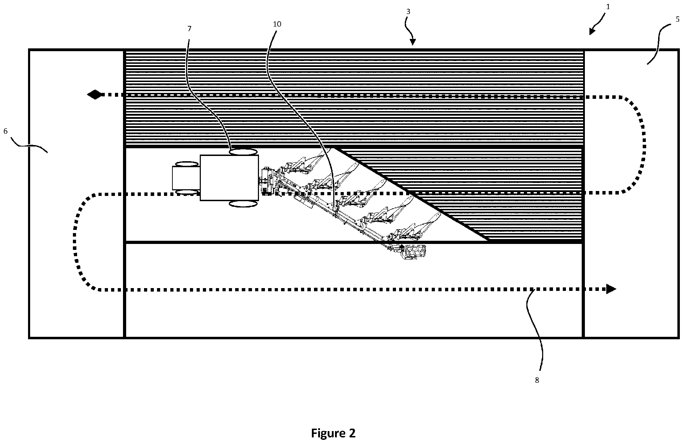

Turning to Figure 2, a typical operation of an agricultural machinery comprising an agricultural vehicle 7 and a plough implement 10 is described. In use, the plough implement 10 is drawn as an attachment (implement) behind the agricultural towing vehicle 7 (e.g. an agricultural vehicle). It will be appreciated that it is equivalently feasible to locate the plough implement 10 in front of or both in front of and behind the agricultural vehicle 7.

Figure 2 shows a schematic work area 1, e.g. a crop field, which is divided into a main field 3 and headlands 5,6. A agricultural vehicle 7 draws the plough implement 10 across the main field 3 in generally parallel working rows. The working rows are part of the trajectory 8 of the agricultural vehicle 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the agricultural vehicle 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the agricultural vehicle 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the agricultural vehicle when the plough is in its transfer position (on the headlands). In other words, the plough is then exclusively supported by the agricultural vehicle 7 via headstock 14 and may be lifted off the ground with a lift cylinder of a tractor linkage.

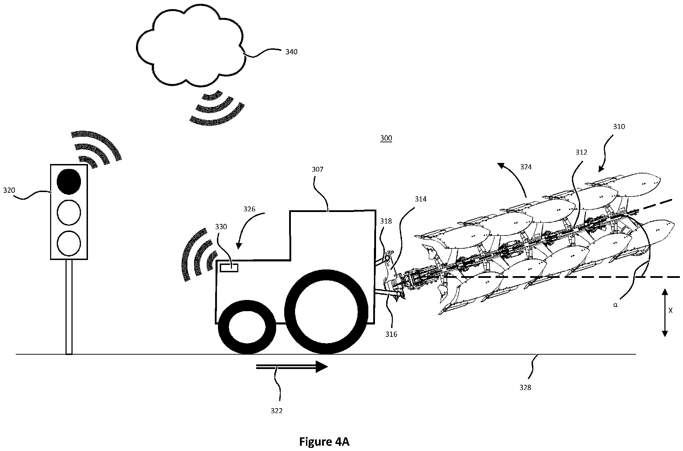

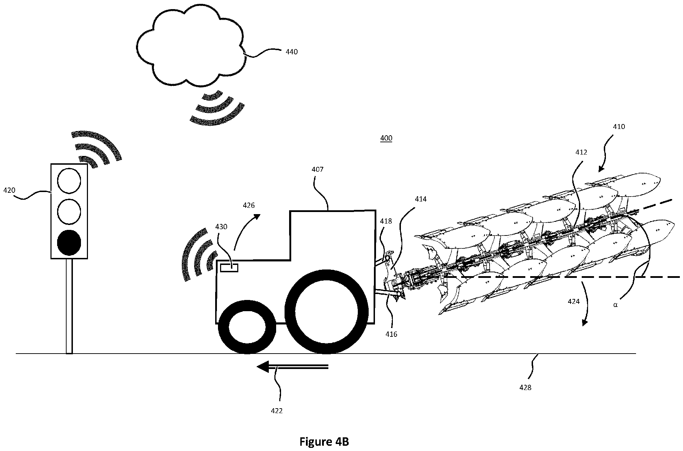

During the turning movement on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural vehicle (not shown). The second configuration is, therefore, also sometimes referred to as the "right side configuration".

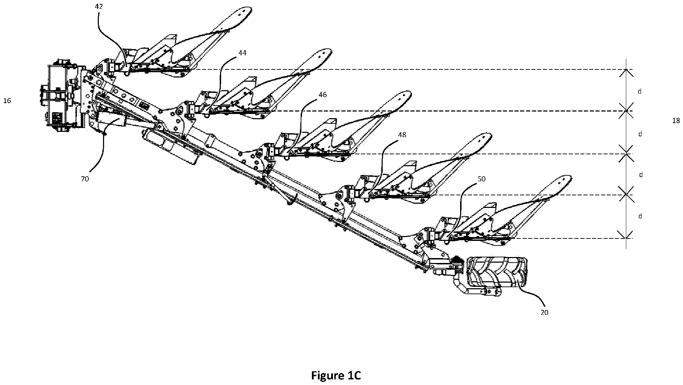

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the agricultural vehicle's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

In order to transfer the agricultural machinery between a garage (or any other storage facility) and the work area 1 or between distant work areas, the plough implement also has a transport position. Similar to the headland/transfer position, all of the ground engaging tools of the plough implement 10, such as the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are lifted off the ground by the agricultural vehicle, in the transport position. In particular, the plough implement may be lifted off the ground by a pair of lifting arms and/or a top-link connecting the agricultural vehicle 7 to the headstock of the plough implement 10. The present disclosure is concerned with systems and methods for controlling an agricultural machinery during transport, i.e. when the agricultural machinery is driven to and from the work areas.

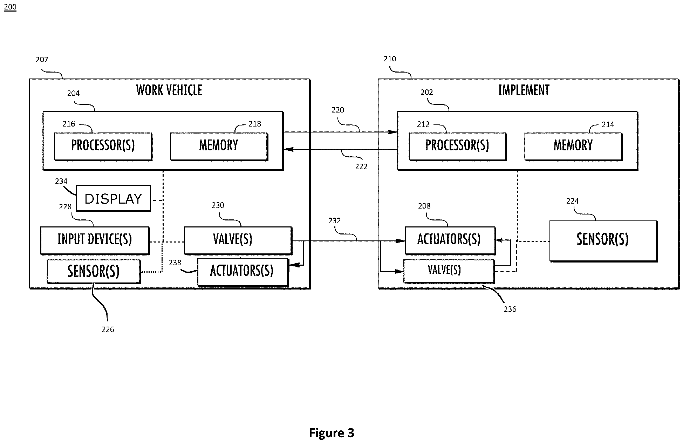

Referring to Figure 3, there is shown a schematic view of an embodiment of a system 200 for controlling an agricultural machinery during transport. The system may be used for controlling an agricultural machinery comprising an agricultural vehicle 207 (e.g. a tractor or other work vehicle) and an agricultural implement 210 (e.g. a plough implement). The system 200 may include a control unit 202 installed on and/or otherwise provided in connection with the agricultural implement 210. In some embodiments, the system may additionally or alternatively include a control unit 204 which is associated with the agricultural vehicle 207. The control unit 202 associated with the agricultural implement 210 and/or the control unit 204 associated with the agricultural vehicle 207 may be capable of electronically controlling the operation of one or more actuators 208 of the agricultural implement 210. Similarly, either the control unit 202 of the implement or the control unit 204 of the agricultural vehicle 207 may be capable of controlling operation of one or more components, such as one or more actuators 238, of the agricultural vehicle 207.

The control unit 202 that is associated with the agricultural implement 210 may include one or more processors 212 associated with one or more memory devices 214. Similarly, the control unit 204 associated with the agricultural vehicle 207 may include one or more processors 216 connected to one or more memory devices 218. The control unit 202 of the agricultural implement 210 and the control unit 204 of the agricultural vehicle 207 may communicate with each other as indicated by arrows 220, 222. For example, the control unit 204 of the agricultural vehicle 207 may communicate with control unit 202 of the agricultural implement 210 via communication line 220 to forward data determined by a vehicle sensor(s) 226 or forward direct commands of the operator entered via one or more input devices 228.

The control unit 204 of the work vehicle 207 may be connected to one or more valves 230, such as hydraulic valves. The valves 230 may be part of a hydraulic system (not shown) located on the agricultural vehicle 207. By controlling the valves 230, the control unit 204 may control a hydraulic fluid supply from a hydraulic fluid source towards the actuators 238 (in this case hydraulic actuators) of the agricultural vehicle 207 and/or towards the actuators 208 of the agricultural implement 210 (via fluid lines 232). Similarly, the control unit 202 of the agricultural implement 210 may be connected to one or more valves 236 that are attached to the agricultural implement 210. By controlling the valves 236, the control unit 202 may further control a hydraulic fluid supply to individual actuators 208 of the agricultural implement 210. The control unit 204 of the agricultural vehicle 207 may be directly connected to the valves 236 or it may be connected to the valves 236 via the control unit 202 of the agricultural implement 210. Again, it should be appreciated that generally only a single control unit 202 or 204 may be required to control both the agricultural implement 210 and the agricultural vehicle 207 together with their corresponding hardware. The control units 202, 204 may also be located remotely from both the agricultural vehicle 207 and the agricultural implement 210. It will also be understood that the actuator(s) 208, 238 of the agricultural machinery may be actuated in various different ways (e.g. pneumatically or mechanically) and are thus not limited to hydraulic actuators described above.

The one or more actuators 208, 238 may be part of mechanisms for moving various parts of the agricultural implement 210 or the entire agricultural implement 210 with respect the agricultural vehicle 207. In one example, the one or more actuators 238 of the agricultural vehicle may correspond to a hydraulic actuator associated with a top-link (Figure 4A) of the agricultural vehicle 207 and/or hydraulic actuators connected to lifting arms (Figure 4A) of the agricultural vehicle 207. Accordingly, the actuators 238 may be used for moving the entire agricultural implement 210 with respect to the agricultural vehicle 207, depending on an input from either one of the control units 202, 204. The one or more actuators 208 of the agricultural implement 210 may correspond to hydraulic actuators for setting different parameters of the agricultural implement 210. For example, the one or more actuators 208 of the agricultural implement 210 could be associated with movements of the main frame 12, such as the plough-width-adjustment-actuator 70 shown in Figure 1C. Additionally, or alternatively, the one or more actuators 208 could include working-depth-adjustment-actuators (not shown), stone-trip-adjustment-actuators (not shown), and generally any other hydraulic or electric actuator of the agricultural implement.

The control unit 202 of the agricultural implement and/or the control unit 204 of the agricultural vehicle 207 are capable of automatically controlling an operation to adjust a position of the plough implement 210 with respect to the agricultural vehicle 207. In this specification, the term "automatically controlling" refers to the ability of the control units 202 and/or 204 to adjust the position of the agricultural implement 210, during transport, fully or partly independent of an operators' input. Rather, the control units 202, 204 are configured to receive travel-data indicative of route parameters and/or operating parameters of the agricultural vehicle during transport and control the one or more actuators depending on a likelihood of a change in the agricultural implement's speed and/or direction of motion derived from the travel-data. The travel-data received by the control unit 202 of the agricultural implement 210 and/or the control unit 204 of the agricultural vehicle 207 may be provided by various sources.

In one embodiment, one or more sensors 224 of the agricultural implement 210 and/or one or more sensors 226 of the work vehicle 207 may be used to determine live travel-data associated with the operation of the agricultural vehicle 207 and/or live-data associated with traffic conditions on along the transport route of the agricultural machinery. To this end, the sensors 224, 226 may include a variety of different sensor types for determining various live-data and/or live-travel-data.

In one example, the one or more sensors 226 of the agricultural vehicle 207 may include optical sensors for determining traffic-data. For example, the optical sensors can be used to monitor the direction and speed of travel of other vehicles in the vicinity of the work vehicle 207. In one embodiment, the sensors may be distance sensors, which together with speed sensors of the agricultural vehicle 207 may be used to determine the speed and distance of vehicles in front of the agricultural work vehicle 207. Optical sensors may alternatively be used to detect the presence of temporary obstacles, such as road works or parked cars, and/or the presence of pedestrians on the route of the agricultural vehicle 207. Other sensors on the agricultural vehicle 207 may include inclination sensors to determine the gradient of the current ground surface, on which the agricultural vehicle 207 is travelling.

The one or more sensors 226 on the agricultural vehicle 207 may alternatively or additionally be configured to determine vehicle-data associated with operational parameters of the agricultural vehicle. For example, the vehicle-data determined by the one or more sensors 226 of this embodiment may include data associated with the speed and the location of the work vehicle, gear changes of the agricultural vehicle, position and/or actuation of any of the operator's pedals, such as the brake pedal, the gas pedal, or the clutch pedal. Some or all of the exemplary vehicle-data parameters may be used alone or in combination with each other to identify or predict a braking event of the agricultural vehicle with respect to the agricultural vehicle 207.

The one or more sensors 224 of the agricultural implement 210 may include various sensors to determine the current position of the agricultural implement 210 with respect to the agricultural vehicle 207. In one example, the one or more sensors 224 may comprise a level sensor to determine an angle of the main frame of the agricultural implement 210 with respect to the road surface. Other examples may include displacement sensors for determining the angle of the main frame in a lateral direction.

Turning to Figure 4A, there is shown a schematic of an agricultural machinery in its transport configuration. The agricultural machinery 300 of Figure 4A comprises an agricultural vehicle 307 and an agricultural implement 310. The agricultural implement 310 may be a plough implement, such as the plough implement 10 shown in Figures 1A to 1C. The agricultural implement 310 is connected to the rear of the agricultural vehicle 307 via its headstock 314. In particular, a lower end of the headstock 314 is connected to a pair of lifting arms 316 (only one lifting arm is illustrated). An opposite, upper end of the headstock 314 is connected to a top link 318. Both the pair of lifting arms 316 and the top link 318 may include hydraulic actuators. The hydraulic actuators of the lifting arms 316 may be used to change the vertical position of the agricultural implement 310 as indicated by arrow X. The one or more hydraulic actuators of the top link 318 may be used to change an angle α of the main frame 312 with respect to the horizontal direction.

Figure 4A illustrates a situation, in which the agricultural vehicle 307 approaches a traffic light 320, which is in a "red" state. Due to the presence of the red traffic light 320, the agricultural vehicle 307 will decelerate as indicated by the arrow 322. As will be appreciated, deceleration of the agricultural vehicle 307 will also affect the agricultural implement 310. The inertia of the agricultural implement 310 will try to maintain movement of the agricultural implement 310 in the direction of travel, causing a momentum 324 that will be transferred onto the agricultural vehicle 307 via the headstock 314 and cause additional weight on the front suspension of the agricultural vehicle as indicated by arrow 326. In fast braking operations, the momentum 324 will be particularly high, therefore possibly causing damage to the agricultural vehicle suspension or even causing the rear wheels of the agricultural vehicle 307 to lift off the road surface 328.

To prevent excessive momenta from being transferred from the agricultural implement 310 onto the agricultural vehicle 307, the agricultural machinery 300 is able to automatically activate an operation of at least one of the actuators before the braking event occurs.

In the example of Figure 4A, the agricultural machinery may include a variety of sensors or receivers that may be used to determine a likelihood of the braking event/deceleration explained above. In one example, the agricultural vehicle 307 may include an optical sensor 330 for identifying traffic signals, such as the "red" status of the traffic light 320 ahead of the agricultural vehicle 307. The sensor 330 may detect the status of the traffic light 320 before the operator activates the brakes of the agricultural vehicle 307. The status of the traffic light 320 may then be transferred to a control unit of the agricultural machinery 300, which, for example together with the speed of the agricultural vehicle 307, may determine a likelihood of a future braking event. In the example of Figure 4A, there is of course a chance that the traffic light 320 will change to status "green" before the operator activates the brakes of the agricultural vehicle 307. However, this likelihood decreases as the vehicle moves closer towards the traffic light 320. The same applies to the speed of the agricultural vehicle 307. In particular, the faster the agricultural vehicle 307 approaches the red traffic light 320, the higher the likelihood of an imminent and significant braking event.

The control unit may process the above factors and other factors in determining the likelihood of a future braking event. In one example, the control unit may process the above parameters to calculate the likelihood of a future braking event. In other examples, the control unit may access a database in its memory to look up a likelihood of a braking event that matches the above parameters.

If the determined likelihood of the braking event exceeds a predetermined likelihood-threshold, the control unit may activate one or more of the above actuators of the agricultural machinery to try and reduce an expected impact of the inertia of the agricultural implement during the braking event. The predetermined likelihood-threshold may be adjustable by the operator. In one example, the likelihood-threshold and could be set to about 90% as a default value. Depending on the driving style of the operator, the control unit may automatically adjust the threshold accordingly.

In the example of Figure 4A, the control unit of the agricultural machinery 300 may activate the hydraulic cylinder of the top link 318 to change the angle α before a braking event occurs. In particular, the control unit may extend the hydraulic actuator of the top link 318 to reduce the angle α when a braking event is predicted (i.e. when the likelihood of a braking event occurring exceeds the likelihood threshold). It will be appreciated that changing the angle α of the agricultural implement will not change the inertia of the agricultural implement 310 but it can reduce the effect on the agricultural vehicle 307. In this example, a lowered agricultural implement 310 will transfer the momentum of the agricultural implement 310 mainly in the direction of travel, such that the additional weight on the front suspension of the agricultural vehicle 307, indicated by arrow 326, is reduced. This will not only increase the comfort of the operator during the braking event but can also increase the service life of various components of the agricultural machinery 300, such as the agricultural vehicle suspension.

In one embodiment, the control unit may not change the position of the agricultural implement 310 with respect to the agricultural vehicle 307, even if the likelihood of a deceleration event occurring is 100%. Rather, in this embodiment, the control unit may further determine a predicted quantity of change in the agricultural implement's speed or direction of motion. In other words, if the control unit determines signs to suggest that the agricultural vehicle 307 will be decelerated slowly and continuously, there may not be a need for a readjustment of the position of the agricultural implement 310. In the scenario of Figure 4A, the control unit may, for example, determine a quantity of change (e.g. a deceleration) of very few km/h per second and decide not to change the position of the agricultural implement.

In the illustration of Figure 4A, there is also shown another example of a communication between the agricultural machinery 300 and the traffic light 320. In particular, the status information of the traffic light 320 may be provided to the agricultural vehicle directly by the traffic light 320. The traffic light 320, which, in this example, is a smart traffic light, communicates with the control unit of the agricultural machinery 300 wirelessly, for example via a cloud system 340 to transfer status-data. Alternatively, the status-data may be received by the agricultural machinery from a central control server that controls some or all of the traffic light signals along the transport route of the agricultural vehicle. The agricultural machinery may, therefore, be able to determine accurately whether the traffic light will be reached during a "green" phase or a "red" phase, which helps in determining the likelihood of a braking event. In this example, the optical sensor 330 on the agricultural vehicle 307 may not be required or only be required for verification purposes.

It will be appreciated that other situations may cause a need for a braking event. In one example, a stop-sign along the route of the agricultural machinery 300 will immediately increase the likelihood of a braking event to 100% when the stop-sign is identified by the agricultural machinery.

Once the likelihood of a change in motion is detected to be above the likelihood-threshold, the control unit of the agricultural machinery may, in one embodiment, determine an appropriate time for movement of the agricultural implement 310 with respect to the agricultural vehicle 307. In this above stop-sign example, the appropriate timing may depend on the position of the agricultural machinery (i.e. the distance from the stop-sign) and the speed at which the stop-sign is approached.

Other examples of events that increase the likelihood of a braking event may be a determination of pedestrians in front of the agricultural vehicle 307, a determination of a downhill movement of the agricultural vehicle, approaching a traffic jam or temporary road works, detected braking events in vehicles in front of the agricultural vehicle 307, and various others. It will be appreciated that every traffic situation has a certain likelihood of braking associated with it that may be determined by the use of various data parameters collected by the agricultural machinery. The present disclosure is concerned with the pro-active movement of the agricultural implement 310 with respect to the agricultural vehicle 307, e.g. if such a braking event is predicted at a determined level of certainty.

It will be appreciated that the present disclosure is also not restricted to braking events alone. Rather, the present disclosure relates to a method that predicts any change in the agricultural implement's speed and/or direction of motion during transport or indeed during field operation (e.g. on uneven soil), and the corresponding pro-active change of the agricultural implement's position with respect to the agricultural vehicle 307 to minimise the impact of the detected change in speed and/or direction of motion. In one example the method may include detecting change in the ground surface of the field during operation (e.g. the start of a slope), which may result in a change of speed (e.g. a deceleration event). Following such a change in landscape on the field, the method may pro-actively change the agricultural implement's position accordingly.

Another example is shown in Figure 4B illustrating a situation in which an acceleration event, indicated by arrow 422 may be predicted. Parts of the embodiment shown in Figure 4B that correspond to parts of the embodiment shown in Figure 4A are labelled with corresponding reference signs increased by "100".

In the embodiment of Figure 4B, the agricultural vehicle 407 has come to a standstill in front of a traffic light 420. As the status of the traffic light 420 changes to green, the likelihood of an imminent acceleration event rises significantly such that the control unit may move the agricultural implement 410 appropriately to minimise the impact of the agricultural implement's inertia. For example, during an acceleration event, the inertia of the agricultural implement 410 may cause a momentum 424, that may act to put more pressure on the rear axle of the agricultural vehicle 407 and may thus increase lift on the front axle of the agricultural vehicle 407 as indicated by arrow 426. The control unit may pre-empt this momentum 424 and increase the angle α between the main frame 412 of the agricultural implement 410 and the horizontal direction.

Similar to the example with reference to Figure 4A, the control unit may be configured to determine the likelihood of an acceleration event occurring followed by a comparison between the determined likelihood and a predetermined likelihood-threshold.

There may be various other situations that increase the likelihood of an acceleration event occurring. For example, the control unit may have access to map-data stored in the memory of the control unit. Alternatively, map data may be provided to the control unit via a remote server. The map-data may include speed limit information such that, together with a location sensor, the control unit of the agricultural machinery may be able to predict an acceleration event if an increase in speed limit occurs along the route of the agricultural machinery. Another example may be vehicle-data such as the position and/or actuation of a gas pedal that may be determined by appropriate sensors on the agricultural vehicle and transferred to the control unit for determination of an imminent acceleration event.

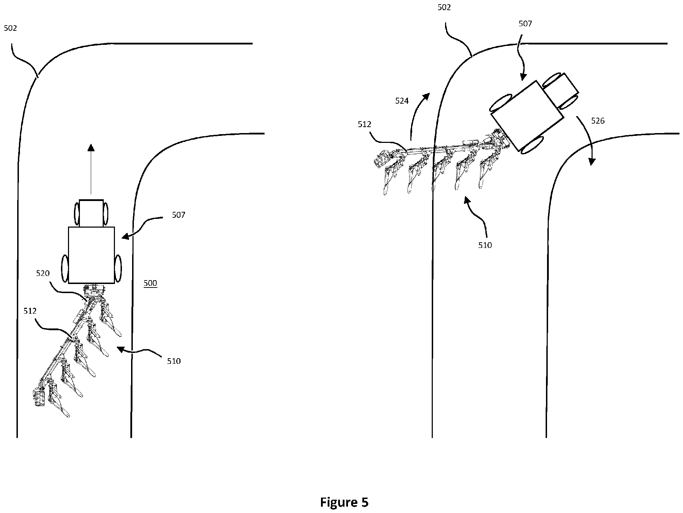

Figure 5 shows an embodiment, in which the agricultural machinery navigates a corner during transport. On the left of Figure 5, the agricultural machinery 500 is approaching a right-hand turn. The agricultural vehicle 507 is, therefore, likely to decelerate, this may be used by the control unit to more favourably rearrange the position of the agricultural implement 510 with respect to the agricultural vehicle 507 before the deceleration event occurs. In the example of Figure 5, the likelihood of a deceleration event occurring will be nearly 100%, depending on the speed of the vehicle and the radius of the turn. Similar to the embodiment of Figure 4A, the agricultural machinery may adjust the position of the agricultural implement to compensate for the predicted deceleration event.

On the right-hand side of Figure 5, the agricultural machinery 500 is navigating the corner 502. As the agricultural vehicle 507 begins to turn, the inertia of the agricultural implement 510 creates a momentum 524 trying to rotate the agricultural vehicle 507 in the direction of arrow 526. This momentum 524 may cause increased wear of the components of the agricultural vehicle 507, for example the tyres. Furthermore, the momentum 524 may introduce instability during cornering.

In order to reduce the effect of the momentum 524 created by the agricultural implement 510 during cornering, the control unit may adjust the position of the agricultural implement 510 with respect to the agricultural vehicle 507 when a cornering event is predicted. In other words, when the control unit determines an increased likelihood of the agricultural implement's direction of motion changing, due to an approaching road corner, the control unit may operate at least one of the above actuators to change the position of the agricultural implement automatically. In one example, the control unit may use the top link hydraulic actuator shown in Figures 4A and 4B to increase the angle α and thereby bring the main frame 512 of the agricultural implement 510 closer to the agricultural vehicle 507. This will reduce the momentum 524 due to a leverage reduction. In other embodiments, the plough-width-adjustment actuator 520 may be used by the control unit to change the angle of the main frame in a horizontal plane, to reduce the impact of the momentum 524.

In the embodiment of Figure 5, the control unit may be provided with map-data in order to determine the likelihood of a change in direction of motion of the agricultural implement 510. The map-data may be stored in a memory device of the control unit. In one example, the map-data may include the bends, turns or corners along the route of the agricultural machinery 500. It follows that, together with the current location and the speed of the agricultural vehicle 507, the control unit may use the map-data to determine when a change of direction of the agricultural implement 510 will likely occur. Once the likelihood for the turn shown in Figure 5 exceeds a predetermined threshold, the control unit may change the position of the agricultural implement 510 with respect to the agricultural vehicle 507 in anticipation of said change in direction.

It will be appreciated that various kinds of travel-data may be used to determine the likelihood of a change in the agricultural implement's speed and/or direction of motion. Non-exclusive examples of travel-data received by the control unit and corresponding changes in the likelihood for a change in the agricultural implement's speed and/or direction of motion are set out below:
Traffic-data associated with the location and/or speed of other vehicles on the road. This may be live-data received by sensors, such as the optical sensor described with reference to Figure 4A or could be live-data received from an online traffic data database. In one embodiment, the agricultural vehicle may communicate with other vehicles within a certain radius to share location and/or speed data for identification of changes in traffic flow. In one example, this traffic-data may be used to identify traffic jams, parked vehicles or the general flow of traffic. It will be appreciated that a traffic-data indicating, e.g., fast reduction of speed in vehicles in front of the agricultural machinery may significantly increase the likelihood of a braking event occurring;
Traffic-data including the presence of temporary obstacles on the route. This may be live-data received by sensors, such as the optical sensor described with reference to Figure 4A or could be live-data received from an online traffic data database. Such temporary obstacles may be temporary road works or temporary traffic lights that will affect the speed and direction of travel of the agricultural machinery. For example, information about temporary road works along the route will inform the control unit of the agricultural machinery of a potential future change in direction and/or a future breaking event.
Traffic-data associated with the presence of pedestrians on the route. This may be detected by a sensor and forwarded to the control unit as traffic-data. If the pedestrians are likely to cross the path of the agricultural machinery, then the likelihood of a breaking event and/or an evasion movement increases significantly;
Traffic-data including status updates of traffic lights along the route. This traffic status may also include a time until the next green or red phase is to be expected. Depending on the speed of travel of the agricultural vehicle, the control unit may determine whether the next traffic light is reached during a green-phase or a red-phase. This can then be used to calculate the likelihood of a breaking event;
Traffic-data including the state of level crossings on the route. Similar to the state of the traffic lights, the state of level crossings on the route and the time until the state changes may be used by a control unit to determine the state during which the agricultural vehicle will reach the level crossing. Considering this information, the control unit can accurately determine the likelihood of a future breaking event;
Map-data including the location of bends, turns or corners along the route. This map-data may be retrieved from a database and can be considered as stored data, rather than live-data. In other words, the control unit may have access to a map of the route navigated by the agricultural machinery. Bends, turns or corners along the route, such as junctions and roundabouts, provide the control unit with ways of determining the likelihood of a change in direction;
Map-data including the gradient of the ground surface along the route. The gradient of the ground surface may be derivable from stored data including any inclines and declines along the route. If the agricultural vehicle navigates a downhill section, the likelihood of a breaking event increases, and the control unit may use this information to change the position of the agricultural implement;
Map-data including traffic signs on the route. For example, stop signs along the route indicate a 100% likelihood of a breaking event. Other examples of traffic signs may include speed limits along the route that may again lead to an increase in the likelihood of a breaking event and/or an increase in the likelihood of an acceleration event;
Vehicle-data associated with gear changes of the agricultural vehicle. In one embodiment, the control unit may receive a signal from a sensor if the operator changes gears on the agricultural vehicle. Such gear changes may be used to determine the likelihood of future acceleration events. For example, if the operator changes the gearbox from neutral to first gear, the likelihood of an imminent acceleration event increases;
Vehicle-data including the position and/or actuation of a brake pedal of the agricultural vehicle. Between initial actuation of the brake pedal and the actuation of the brakes, there is a typical time delay that may be used by a control unit to identify a future braking event;
Vehicle-data including the position and/or actuation of a gas pedal of the agricultural vehicle. Similar to the position and/or actuation of the brake pedal, the control unit may determine a significant rise in the likelihood of an acceleration event if the gas pedal is actuated;
Vehicle-data including the position and/or actuation of a clutch pedal of the agricultural vehicle. Immediately before a braking event, an operator may hastily depress the clutch pedal, which may be used by the control unit to identify an imminent braking event. Similarly, during acceleration, the operator will slowly release the clutch pedal, which may be used by the control unit to identify or predict a future acceleration event.

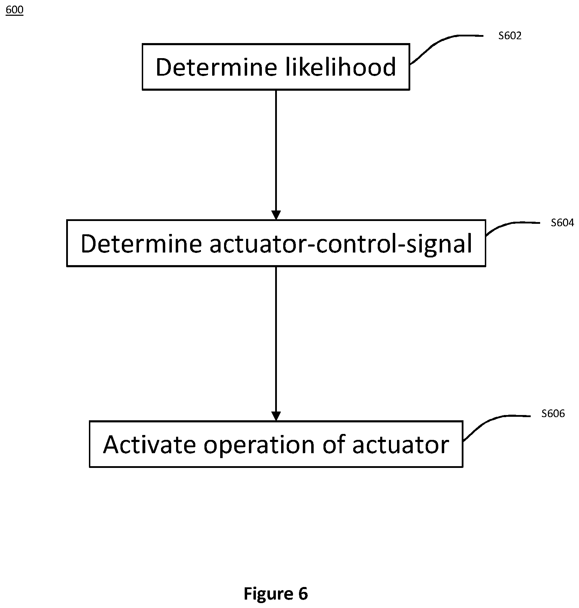

Turning to Figure 6, there is shown a method for controlling an agricultural machinery according to an embodiment of the present disclosure. The method 600 may be used to dampen or control movements of the agricultural implement with respect to the agricultural vehicle. For example, if the agricultural machinery navigates public roads during transport between a work area and a garage, sudden changes in speed or direction may cause instability in the agricultural vehicle that may lead to increased wear of vehicle parts and/or discomfort to the operator.

In view of the above, the method 600 shown in Figure 6 includes a first step S602 for determining the likelihood of a change in the agricultural implement's speed and/or direction of motion, particularly before such a change occurs. In other words, the method predicts a change of motion and assigns a certainty value, such as the likelihood to this prediction.

In a next step S604, the method includes determining an actuator-control-signal based on the likelihood of change. In one example, this step could mean a comparison between the determined likelihood of a change in the agricultural implement's speed and/or direction of motion and a predetermined likelihood-threshold. The predetermined likelihood-threshold may be set by the manufacturer and/or the operator and may be changed at any point during the operation. If the likelihood-threshold is overcome, a control unit may set the actuator-control signal to a value for triggering a predetermined amount of movement of a suitable actuator. In the example of Figure 4A, if the likelihood-threshold is set to 90% and the determined likelihood in step S602 overcomes this likelihood threshold, the control unit may be configured to set an actuator-control signal for the top-link actuator that will cause full extension. It will be understood that an increase in the predetermined threshold will result in less assistance in controlling the agricultural machinery, whereas a decrease in the threshold will cause the control unit to manipulate the agricultural machinery more often. If the likelihood of a future change in the agricultural implement's speed and/or direction of motion does not exceed the predetermined threshold, the method 600 may return to step S602. In other words, the method 600 continuously, may periodically, or intermittently determines the likelihood of a change in motion for as long as the likelihood-threshold is not exceeded.

In an alternative example, step S604 may calculate or look up a variable actuator-control-signal, based on the likelihood value determined in step S602. For example, if the likelihood in step S602 is determined to be 90% the actuator-control-signal may cause a more significant movement than if the likelihood value was lower, e.g. 60%. In the example of Figure 4A, if the breaking event had a likelihood of 90% or more, an algorithm in the control unit may be used to determine an actuator-control-signal that will cause full extension of the top-link actuator. If, instead, the likelihood in step S602 is determined to be lower than 90%, e.g. 60%, the algorithm may be used to determine an actuator-control-signal for partial extension of the top link actuator. Using this algorithm to base the actuator-control-signal on the likelihood value results in slight movements of the agricultural implement if a change in motion is less likely and larger movement of the agricultural implement if a change in motion is more likely.

Following step S604, the method 600 includes a step S606, in which an operation of at least one actuator for moving at least a part of the agricultural implement with respect to the agricultural vehicle is automatically activated on basis of the actuator-control-signal determined in step S604. Of course, the method, in step S606, may also activate a plurality of actuators depending on the kind of change detected. Actuation of the one or more actuators is effected to reduce the impact of the agricultural implement's inertia during the detected event.

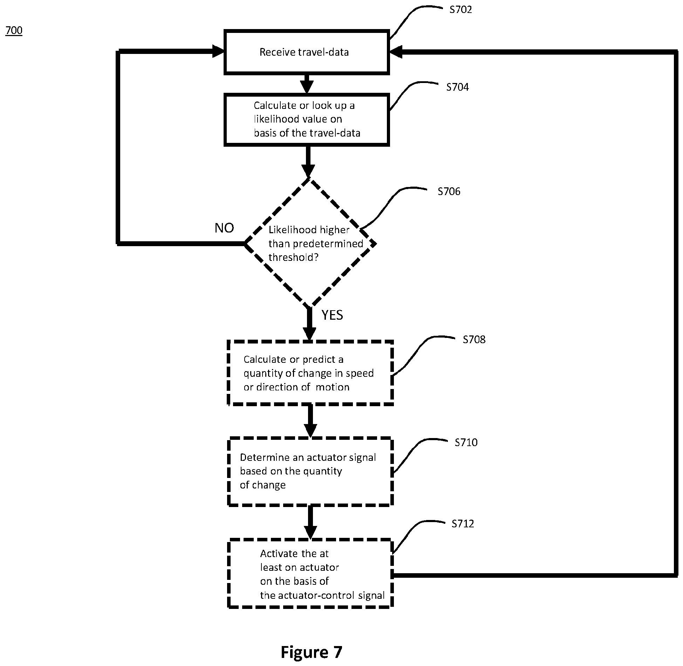

Figure 7 shows another embodiment of the method of the present disclosure. The method 700 shown in Figure 7 includes a first step S702 for receiving travel-data. Examples of travel-data received in step S702 are set out in detail above.

Depending on the travel-data received, the method may include a step S704 for calculating and/or looking up a likelihood value regarding a change in motion of the agricultural implement. For example, if the travel-data indicates that the agricultural machinery is approaching a stop-sign, the likelihood of a braking event, i.e. a deceleration event, will immediately be set as 100%.

In a step S706, the likelihood value determined in step S704 may be compared to a predetermined likelihood-threshold. This method step is substantially identical to step S604 described with respect to Figure 6. In the above example, the likelihood of the braking event occurring is 100% and will thus always exceed the likelihood threshold, which will be set to less than 100%.

If the likelihood value is higher than the predetermined likelihood-threshold, the method comprises a further step S708 for calculating or predicting a quantity of change in speed or direction of motion. For example, in the above example, the likelihood value of a change in motion will increase to 100% and a control unit may calculate the quantity of change, such as the deceleration value that will bring the agricultural vehicle to a stop before the stop-sign is reached.

The kind of change (e.g. acceleration, deceleration, cornering, etc.) and the quantity of change in speed or direction of the agricultural implement's motion, will be used by the control unit in another step S710 to determine an actuator-control-signal for damping the effect of the change in motion. In this example, during a heavy braking event, the agricultural machinery may determine an actuator-signal for the top link of the agricultural vehicle. The actuator-signal may be determined for lowering the agricultural implement (e.g. decrease angle α shown in Figure 4A) to avoid excessive weight being transferred to the front axle of the agricultural vehicle during the upcoming emergency brake.

In a last step S712, the method 700 will activate at least one actuator to move the agricultural implement with respect to the agricultural vehicle on basis of the actuator-control signal. In the example of hydraulic actuators, the method may include providing an electronic actuator-signal to a hydraulic system, which will in turn provide the hydraulic actuator with hydraulic fluid sufficient to effect the repositioning of the agricultural implement with respect to the agricultural vehicle. In the above example, the actuator-signal may cause the hydraulic system of the agricultural vehicle to provide the top-link actuator with hydraulic fluid to lower the agricultural implement as intended.

While the above has been described in relation to agricultural ploughs, it should be understood that the present disclosure is generally applicable to any agricultural machinery including one or more agricultural implements.

The listing or discussion of an apparently prior-published document in this specification should not necessarily be taken as an acknowledgement that the document is part of the state of the art or is common general knowledge.

## Claims

1. A method for controlling an agricultural machinery, the agricultural machinery comprising an agricultural vehicle and an agricultural implement, the agricultural machinery comprising
at least one actuator for moving at least a part of the agricultural implement with respect to the agricultural vehicle, wherein the method comprises:
determining a likelihood of a future change in the agricultural implement's speed and/or direction of motion;
determining an actuator-control-signal based on the likelihood of change;
activating the at least one actuator on the basis of the actuator-control-signal to reduce an impact of the agricultural implement's inertia during the future change in the agricultural implement's speed and/or direction of motion.

2. The method of any of Claims 1, wherein determining the actuator-control-signal comprises:
calculating or predicting a quantity of change in the agricultural implement's speed or direction of motion;
determining the actuator-control-signal based on the quantity of change.

3. The method of Claim 1 or 2, wherein determining the likelihood of a future change in the agricultural implement's speed of motion or direction of motion comprises:
receiving travel-data associated with route parameters and/or operating parameters of the agricultural vehicle;
determining a likelihood value on the basis of the travel-data.

4. The method of Claim 3, wherein determining the likelihood value comprises calculating or looking-up the likelihood value on the basis of the travel-data.

5. The method of Claim 3 or 4, wherein:
at least a part of the travel-data is stored data obtained from a memory device; and / or
at least a part of the travel-data is live-data obtained from sensors.

6. The method of any of Claims 1 to 5, wherein the future change in the agricultural implement's speed and/or direction of motion comprises:
a braking event;
a deceleration event;
an acceleration event; or
a cornering event.

7. The method of any of Claims 3 to 6, wherein the travel-data comprises traffic-data associated with traffic conditions of a route along which the agricultural implement is being moved.

8. The method of Claim 7, wherein the traffic-data is indicative of one or more of:
location and/or speed of other vehicles on the route;
presence of temporary obstacles on the route;
presence of pedestrians on the route;
state of traffic lights on the route;
state of level crossings on the route.

9. The method of any of Claims 3 to 8, wherein the travel-data comprises map-data associated with characteristics of a route along which the agricultural implement is being moved.

10. The method of Claim 9, wherein the map-data is indicative of the location of one or more of:
bends, turns or corners along the route;
a gradient of the ground surface along the route;
traffic signs on the route;
speed bumps on the route;
junctions along the route;
speed limits along the route.

11. The method of any of Claims 3 to 10, wherein the travel-data comprises vehicle-data associated with operational parameters of the agricultural vehicle.

12. The method of Claim 11, wherein the vehicle-data is indicative of one or more of:
current speed of the agricultural vehicle;
gear changes of the agricultural vehicle;
position and/or actuation of a brake pedal of the agricultural vehicle;
position and/or actuation of a gas pedal of the agricultural vehicle;
position and/or actuation of a clutch pedal of the agricultural vehicle.

13. The method of any of Claims 1 to 12, wherein the at least one actuator is a hydraulic actuator.

14. An agricultural machinery comprising:
an agricultural implement (310);
an agricultural vehicle (307);
at least one actuator for moving at least a part of the agricultural implement (310); and
a control unit (202, 204) configured to:
determine a likelihood of a future change in the agricultural implement's speed and/or direction of motion,
determine an actuator-control-signal based on the likelihood of change;
activate the at least one actuator on the basis of the actuator-control-signal to reduce an impact of the agricultural implement's inertia during the future change in the agricultural implement's speed and/or direction of motion.

15. The agricultural implement of Claim 14, wherein the agricultural implement is a fully-mounted agricultural implement.

## Patentansprüche

1. Verfahren zum Steuern einer landwirtschaftlichen Maschine, wobei die landwirtschaftliche Maschine ein landwirtschaftliches Fahrzeug und ein landwirtschaftliches Arbeitsgerät aufweist, wobei die landwirtschaftliche Maschine mindestens eine Bestätigungsrichtung zum Bewegen mindestens eines Teils des landwirtschaftlichen Arbeitsgeräts bezüglich des landwirtschaftlichen Fahrzeugs aufweist, wobei das Verfahren folgende Schritte aufweist:
Bestimmen einer Wahrscheinlichkeit einer zukünftigen Veränderung der Geschwindigkeit und/oder der Bewegungsrichtung des landwirtschaftlichen Arbeitsgeräts;
Bestimmen eines Betätigungseinrichtungs-Steuersignals basierend auf der Wahrscheinlichkeit der Veränderung;
Betätigen der mindestens einen Betätigungseinrichtung auf Basis des Betätigungseinrichtungs-Steuersignals, um einen Einfluss der Massenträgheit des landwirtschaftlichen Arbeitsgeräts während einer zukünftigen Veränderung der Geschwindigkeit und/oder der Bewegungsrichtung des landwirtschaftlichen Arbeitsgeräts zu reduzieren.

2. Verfahren nach Anspruch 1, wobei das Bestimmen des Betätigungseinrichtungs-Steuersignals folgende Schritte aufweist:
Berechnen oder Vorhersagen eines Veränderungsbetrags der Geschwindigkeit oder der Bewegungsrichtung des landwirtschaftlichen Arbeitsgeräts;
Erfassen des Betätigungseinrichtungs-Steuersignals basierend auf dem Veränderungsbetrag.

3. Verfahren nach Anspruch 1 oder 2, wobei das Bestimmen der Wahrscheinlichkeit einer zukünftigen Veränderung der Bewegungsgeschwindigkeit oder der Bewegungsrichtung des landwirtschaftlichen Arbeitsgeräts folgende Schritte aufweist:
Empfangen von Bewegungsdaten, die mit Routenparametern und/oder Betriebsparametern des landwirtschaftlichen Fahrzeugs verknüpft sind;
Bestimmen eines Wahrscheinlichkeitswerts auf der Basis der Bewegungsdaten.

4. Verfahren nach Anspruch 3, wobei das Bestimmen des Wahrscheinlichkeitswerts ein Berechnen oder ein Nachschlagen des Wahrscheinlichkeitswerts auf der Basis der Bewegungsdaten aufweist.

5. Verfahren nach Anspruch 3 oder 4, wobei:
mindestens ein Teil der Bewegungsdaten gespeicherte Daten sind, die von einer Speichervorrichtung erhalten werden; und/oder
mindestens ein Teil der Bewegungsdaten Echtzeitdaten sind, die von Sensoren erhalten werden.

6. Verfahren nach einem der Ansprüche 1 bis 5, wobei die zukünftigen Veränderungen der Geschwindigkeit und/oder der Bewegungsrichtung des landwirtschaftlichen Arbeitsgeräts aufweisen:
einen Bremsvorgang;
einen Verzögerungsvorgang;
einen Beschleunigungsvorgang; oder
einen Kurvenfahrtvorgang.

7. Verfahren nach einem der Ansprüche 3 bis 6, wobei die Bewegungsdaten Verkehrsdaten aufweisen, die mit Verkehrszuständen einer Route verknüpft sind, entlang der das landwirtschaftliche Arbeitsgerät bewegt wird.

8. Verfahren nach Anspruch 7, wobei die Verkehrsdaten kennzeichnend für eine oder mehrere der folgenden Daten sind:
Standort und/oder Geschwindigkeit von anderen Fahrzeugen auf der Route;
Vorhandensein von temporären Hindernissen auf der Route;
Vorhandensein von Fußgängern auf der Route;
Zustand von Lichtzeichenanlagen auf der Route;
Zustand von Bahnübergängen auf der Route.

9. Verfahren nach einem der Ansprüche 3 bis 8, wobei die Bewegungsdaten Kartendaten aufweisen, die mit Eigenschaften einer Route verknüpft sind, entlang der das landwirtschaftliche Arbeitsgerät bewegt wird.

10. Verfahren nach Anspruch 9, wobei die Kartendaten kennzeichnend für einen Standort eines oder mehrerer der folgenden Elemente sind:
Biegungen, Kurven oder Ecken entlang der Route;
einer Neigung der Bodenoberfläche entlang der Route;
Verkehrszeichen auf der Route;
Rüttelschwellen auf der Route;
Kreuzungen entlang der Route;
Geschwindigkeitsbeschränkungen entlang der Route.

11. Verfahren nach einem der Ansprüche 3 bis 10, wobei die Bewegungsdaten Fahrzeugdaten aufweisen, die mit Betriebsparametern des landwirtschaftlichen Fahrzeugs verknüpft sind.

12. Verfahren nach Anspruch 11, wobei die Fahrzeugdaten kennzeichnend für eine oder mehrere der folgenden Daten sind:
aktuelle Geschwindigkeit des landwirtschaftlichen Fahrzeugs;
Schaltwechsel des landwirtschaftlichen Fahrzeugs;
Position und/oder Betätigung eines Bremspedals des landwirtschaftlichen Fahrzeugs;
Position und/oder Betätigung eines Gaspedals des landwirtschaftlichen Fahrzeugs;
Position und/oder Betätigung eines Kupplungspedals des landwirtschaftlichen Fahrzeugs.

13. Verfahren nach einem der Ansprüche 1 bis 12, wobei die mindestens eine Betätigungseinrichtung eine hydraulische Betätigungseinrichtung ist.

14. Landwirtschaftliche Maschine mit:
einem landwirtschaftlichen Arbeitsgerät (310);
einem landwirtschaftlichen Fahrzeug (307);
mindestens einer Betätigungseinrichtung zum Bewegen mindestens eines Teils des landwirtschaftlichen Arbeitsgeräts (310); und
einer Steuereinheit (202, 204), die eingerichtet ist zum:
Bestimmen einer Wahrscheinlichkeit einer zukünftigen Veränderung der Geschwindigkeit und/oder der Bewegungsrichtung des landwirtschaftlichen Fahrzeugs,
Bestimmen eines Betätigungseinrichtungs-Steuersignals basierend auf der Wahrscheinlichkeit einer Veränderung;
Aktivieren der mindestens einen Betätigungseinrichtung auf der Basis des Betätigungseinrichtungs-Steuersignals, um einen Einfluss der Massenträgheit des landwirtschaftlichen Arbeitsgeräts während einer zukünftigen Veränderung der Geschwindigkeit und/oder der Bewegungsrichtung des landwirtschaftlichen Fahrzeugs zu reduzieren.

15. Landwirtschaftliches Arbeitsgerät nach Anspruch 14, wobei das landwirtschaftliche Arbeitsgerät ein vollständig angebrachtes landwirtschaftliches Arbeitsgerät ist.

## Revendications

1. Procédé de commande d'une machine agricole, la machine agricole comprenant un engin agricole et un outil agricole, la machine agricole comprenant au moins un actionneur permettant de déplacer au moins une partie de l'outil agricole par rapport à l'engin agricole, dans lequel le procédé comprend :
la détermination de la probabilité d'un futur changement de la vitesse et/ou de la direction de déplacement de l'outil agricole ;
la détermination d'un signal de commande de l'actionneur à partir de la probabilité de changement ;
l'activation de l'au moins un actionneur à partir du du signal de commande de l'actionneur afin de réduire un impact de l'inertie de l'outil agricole au cours du futur changement de la vitesse et/ou de la direction de déplacement de l'outil agricole.

2. Procédé selon la revendication 1, dans lequel la détermination du signal de commande de l'actionneur comprend :
le calcul ou la prédiction de la probabilité d'un futur changement de la vitesse et/ou de la direction de déplacement de l'outil agricole ;
la détermination du signal de commande de l'actionneur à partir de quantité de changement.

3. Procédé selon la revendication 1 ou 2, dans lequel la détermination de la probabilité d'un futur changement de la vitesse de déplacement ou de la direction de déplacement comprend:
la réception de données de déplacement associées à des paramètres de route et/ou des paramètres de fonctionnement de l'engin agricole ;
la détermination d'une valeur de probabilité à partir de données de déplacement.

4. Procédé selon la revendication 3, dans lequel la détermination de la valeur de probabilité comprend le calcul ou la recherche de la valeur de probabilité à partir des données de déplacement.

5. Procédé selon la revendication 3 ou 4, dans lequel :
au moins une partie des données de déplacement sont des données obtenues d'un dispositif de mémoire ; et/ou
au moins une partie des données de déplacement sont des données en temps réel obtenues de capteurs.

6. Procédé selon l'une quelconque des revendications 1 à 5, dans lequel le futur changement de la vitesse et/ou de la direction de déplacement de l'outil agricole comprend :
un événement de freinage ;
un événement de décélération ;
un événement d'accélération ; ou
un événement de virage.

7. Procédé selon l'une quelconque des revendications 3 à 6, dans lequel les données de déplacement comprennent des données de trafic associées aux conditions de trafic d'une route le long de laquelle l'outil agricole est déplacé.

8. Procédé selon la revendication 7, dans lequel les données de trafic renseignent sur un ou plusieurs éléments parmi les éléments suivants :
emplacement et/ou vitesse d'autres véhicules sur la route ;
présence d'obstacles temporaires sur la route ;
présence de piétons sur la route ;
état des feux de circulation sur la route ;
état des passages à niveau sur la route.

9. Procédé selon l'une quelconque des revendications 3 à 8, dans lequel les données de déplacement comprennent des données cartographiques associées aux caractéristiques d'une route le long de laquelle l'outil agricole est déplacé.

10. Procédé selon la revendication 9, dans lequel les données cartographiques renseignent sur l'endroit où se trouvent ou un ou plusieurs des éléments suivants :
virages, s tournants ou angles le long de la route ;
gradient de la surface du sol le long de la route ;
signaux routiers sur la route ;
ralentisseurs sur la route ;
s carrefours sur la route ;
limitations de vitesse sur la route.

11. Procédé selon l'une quelconque des revendications 3 à 10, dans lequel les données de déplacement comprennent des données relatives à l'engin associées aux paramètres de fonctionnement de l'engin agricole.

12. Procédé selon la revendication 11, dans lequel les données relatives à l'engin renseigner sur un ou plusieurs des éléments suivants :
la vitesse courante de l'engin agricole ;
des changements de vitesse de l'engin agricole ;
la position et/ou l'actionnement d'une pédale de frein de l'engin agricole ;
la position et/ou l'actionnement d'une pédale de gaz de l'engin agricole ;
la position et/ou l'actionnement d'une pédale d'embrayage de l'engin agricole.

13. Procédé selon l'une quelconque des revendications 1 à 12, dans lequel l'au moins un actionneur est un actionneur hydraulique.

14. Machine agricole comprenant :
on outil agricole (310) ;
un engin agricole (307) ;
au moins un actionneur permettant de déplacer au moins une partie de l'outil agricole (310) ; et
une unité de commande (202, 204) configurée pour :
déterminer la probabilité d'un futur changement de la vitesse et/ou de la direction de déplacement de l'outil agricole,
déterminer un signal de commande de l'actionneur à partir de la probabilité de changement ;
activer l'au moins un actionneur à partir du signal de commande de l'actionneur afin r réduire un impact de l'inertie de l'outil agricole lors du futur changement de la vitesse et/ou de la direction du déplacement de l'outil agricole.

15. Outil agricole selon la revendication 14 dans lequel l'outil agricole est un outil agricole complément monté.
